(19) Europäisches Patentamt / European Patent Office / Office européen des brevets

(11) **EP 1 915 285 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(21) Anmeldenummer: **06792516.4**

(22) Anmeldetag: **18.07.2006**

(51) Int Cl.:
**B62D 15/02** ^(2006.01)

(86) Internationale Anmeldenummer:
**PCT/EP2006/064376**

(87) Internationale Veröffentlichungsnummer:
**WO 2007/017351 (15.02.2007 Gazette 2007/07)**

(54) **VORRICHTUNG UND VERFAHREN ZUR UNTERSTÜTZUNG EINES EINPARKVORGANGS EINES FAHRZEUGS**

DEVICE AND METHOD FOR ASSISTING A PARKING MANEUVER OF A VEHICLE

DISPOSITIF ET PROCEDE POUR ASSISTER UNE OPERATION DE STATIONNEMENT D'UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.08.2005 DE 102005037468**

(43) Veröffentlichungstag der Anmeldung:
**30.04.2008 Patentblatt 2008/18**

(73) Patentinhaber: **ROBERT BOSCH GMBH
70442 Stuttgart (DE)**

(72) Erfinder:
• LEE, Wei-Chia
  **71229 Leonberg (DE)**
• HENZLER, Markus
  **73274 Notzingen (DE)**

(56) Entgegenhaltungen:
**EP-A1- 1 491 979      EP-A2- 0 849 144
WO-A-2005/100135**

## Beschreibung

Stand der Technik

Die Erfindung betrifft eine Vorrichtung zur Unterstützung eines Einparkvorgangs eines Fahrzeugs, insbesondere eines Kraftfahrzeugs, in eine quer zu dem Fahrzeug angeordnete Parklücke mit einer eine Sensoranordnung aufweisenden Parklückenvermessungseinrichtung und mit einer mit der Sensoranordnung verbundenen Auswerteeinheit zum Bestimmen einer Einparkbahn des Fahrzeugs in die Parklücke. Darüber hinaus betrifft die Erfindung ein Verfahren zur Unterstützung eines Einparkvorgangs eines Fahrzeugs, insbesondere eines Kraftfahrzeugs, in eine quer zu dem Fahrzeug angeordnete Parklücke mittels einer Vorrichtung der eingangs genannten Art, wobei vor einem Einparken des Fahrzeugs in die Parklücke mittels der Parklückenvermessungseinrichtung eine zumindest teilweise geometrische Vermessung der Parklücke vorgenommen und mittels der Auswerteeinheit auf Grundlage der Vermessung der Parklücke eine Einparkbahn des Fahrzeugs in die Parklücke bestimmt wird.

Aus EP 1 462 342 A2 sind eine Einparkhilfseinrichtung und ein Einparkhilfsverfahren für ein Rückwärtseinparken eines Fahrzeugs in eine quer zu dem Fahrzeug angeordnete Parklücke bekannt. Dabei ist eine Rückkamera zur Aufnahme eines auf einem Bildschirm darstellbaren Bildes von einem rückwärtigen Bereich des Fahrzeugs vorgesehen. In das Bild ist ein Parkrahmen einblendbar, welcher von einem Fahrer des Fahrzeugs für eine Festlegung einer Parkzielposition verschoben und verdreht werden kann. Ausgehend von einer augenblicklichen Position des Fahrzeugs wird von der Einparkhilfseinrichtung ein Pfad zum Erreichen der von dem Fahrer festgelegten Parkzielposition berechnet. Ist die Parkzielposition für das Fahrzeug nicht erreichbar, so fordert die Einparkhilfseinrichtung den Fahrer auf, eine geänderte Parkzielposition festzulegen.

Weiterhin ist unter der Bezeichnung semi-autonomer Parkassistent (SPA) eine Einrichtung zum semi-autonomen Einparken eines Kraftfahrzeugs bekannt. Die Einrichtung, bei der ein Fahrer des Kraftfahrzeugs Lenkrad sowie Fahr- und Bremspedal des Fahrzeugs bedienen muss, berechnet auf Grundlage von geometrischen Informationen, die aus einer Parklückenvermessung gewonnen werden, und von Fahrzeuggeometriedaten des einzuparkenden Fahrzeugs eine Bahnkurve für das Einparken des Kraftfahrzeugs in eine seitliche, längs zu dem einzuparkenden Fahrzeug angeordnete Parklücke. Die Parklückenvermessung nutzt eine Sensoranordnung an dem Kraftfahrzeug, mittels welcher bei einem Vorbeifahren des Kraftfahrzeugs an der Parklücke und/oder während eines Annäherns des Kraftfahrzeugs an die Parklücke die Parklücke erfasst und ausgemessen wird. Zum Abstellen des Fahrzeugs in der Parklücke ist es vorgesehen, dass der Fahrer der von dem Parkassistenten berechneten Bahnkurve folgt. Dabei kann es in Abhängigkeit von dem Umfeld der Parklücke gegebenenfalls zu einer Gefahr von Kollisionen und einer Nichtausführbarkeit des von dem Parkassistenten vorgesehenen, der berechneten Bahnkurve folgenden Einparkvorgangs kommen.

Aus der EP 0 189 144 A2 ist eine Vorrichtung zur automatischen Lenkung eines Fahrzeugs bekannt. Hierbei wird eine zwischen Hindernissen liegende Parklücke sensorisch erfasst und das Fahrzeug wird entlang einer berechneten Bahnkurve automatisch in die Parklücke gelenkt.

Aus der EP 1491979 A1 ist eine Fahrerassistenzvorrichtung für ein Fahrzeug bekannt, bei dem eine Bahnkurve des Fahrzeugs in eine Parklücke berechnet und während der Fahrt korrigiert wird.

Aus der nachveröffentlichten WO 2005/100 135 A1 ist eine Vorrichtung zur Unterstützung eines Einparkvorgangs eines Fahrzeugs mit einer Rückfahrkamera zur Aufnahme eines den Raum hinter dem Fahrzeug wiedergebenden Rückfahrbildes bekannt. In der Anzeige werden gleichzeitig mehrere Entscheidungsmarken für einen Lenkeinschlag dargestellt, die jeweils mit einer unterschiedlichen Anzahl von für den Einparkvorgang mindestens auszuführenden Zügen korrespondieren.

Der Erfindung liegt die Aufgabe zugrunde, eine Vorrichtung zur Unterstützung eines Einparkvorgangs eines Fahrzeugs der eingangs genannten Art zu schaffen, die das Einparken weiter vereinfacht und einem Fahrer des Fahrzeugs eine präzisierte Einparkunterstützung auch unter schwierigen Umgebungsbedingungen bietet. Außerdem liegt der Erfindung die Aufgabe zugrunde, ein Verfahren zur Unterstützung eines Einparkvorgangs unter Zuhilfenahme einer solchen Vorrichtung anzugeben.

Die erstgenannte Aufgabe wird erfindungsgemäß dadurch gelöst, dass bei einer Vorrichtung der eingangs beschriebenen Art eine mit der Auswerteeinheit verbundene Auswahleinrichtung zum Auswählen einer Einparkbahn aus mehreren verschiedenen von der Auswerteeinheit bestimmten Einparkbahnen vorgesehen ist.

Die oben zweitgenannte Aufgabe wird erfindungsgemäß dadurch gelöst, dass bei einem Verfahren der eingangs beschriebenen Art mittels der Auswerteeinheit zumindest zwei voneinander verschiedene Einparkbahnen bestimmt werden und dass mittels der Auswahleinrichtung eine der bestimmten Einparkbahnen als tatsächliche Einparkbahn ausgewählt wird.

Vorteile der Erfindung

Verfahren und Vorrichtung gemäß der Erfindung sind dazu geeignet, einen Fahrer eines Fahrzeugs, insbesondere eines Kraftfahrzeugs, und zwar sowohl eines Personenkraftwagens als auch eines Nutzkraftwagens, bei einem Einparken, vorzugsweise einem Rückwärtseinparken, in eine quer zu dem Fahrzeug angeordnete Parklücke zu unterstützen; das heißt die Längserstreckung der Parklücke ist bei der Erfindung quer, bevorzugt unter einem Winkel von 90°, zu der Längsachse des einzuparkenden, an der Parklücke vorbeifahrenden Fahrzeugs ausgerichtet. Eine derartige Parklücke wird allgemein auch als Querparklücke bezeichnet. Mit Hilfe einer Parklückenvermessungseinrichtung, und zwar insbesondere einer Sensoranordnung, welche vorzugsweise seitlich, der Parklücke zugewandt an dem Fahrzeug angeordnet ist, der Parklückenvermessungseinrichtung wird während eines Vorbeifahrens des Fahrzeugs eine zumindest teilweise geometrische Vermessung der Parklücke vorgenommen; bei der Vermessung gegebenenfalls nicht erfasste geometrische Daten der Parklücke können beispielsweise anhand von in der Parklückenvermessungseinrichtung hinterlegten typischen Parklückenmustern von der Parklückenvermessungseinrichtung ergänzt werden. Ausgehend von der Vermessung der Parklücke und unter Berücksichtigung von festliegenden, durch das einzuparkende Fahrzeug selbst vorgegebenen Fahrzeuggeometriedaten werden mögliche Einparkbahnen in die Parklücke bestimmt. Der bedeutende Vorteil der Erfindung liegt darin, dass unter mehreren grundsätzlich möglichen Einparkbahnen des Fahrzeugs in die Parklücke eine im Einzelfall besonders geeignete Einparkbahn ausgewählt werden kann. Diese Auswahl kann beispielsweise automatisch, gestützt auf in der erfindungsgemäßen Vorrichtung hinterlegte Vorgaben und/oder Bedingungen erfolgen, oder sie kann zum Beispiel manuell durch den Fahrer unter Berücksichtigung von durch ihn augenblicklich erkannte Umfeldbedingungen, die beispielsweise von der Sensoranordnung systembedingt nicht vollumfänglich zu erfassen sind, und/oder seines Befindens erfolgen. Grundsätzlich können zum Einparken in eine Querparklücke von der erfindungsgemäßen Vorrichtung ausgehend von einer Ist-Position des einzuparkenden Fahrzeugs unterschiedliche Einparkbahnen bestimmt werden, welche sämtlich zu derselben Soll-Position, die sich durch ein gerades, ausgerichtetes Abstellen des Fahrzeugs in der Parklücke auszeichnen, des geparkten Fahrzeugs führen. Die Erfindung bietet die Möglichkeit, von diesen in Frage kommenden Einparkbahnen, die sich beispielsweise hinsichtlich der erforderlichen Einparkzüge und/ oder eines erforderlichen maximalen Lenkradeinschlags unterscheiden, die jeweils am besten geeignete auszuwählen. Entlang der ausgewählten Einparkbahn, die die tatsächliche Einparkbahn für den Einparkvorgang darstellt, wird das Fahrzeug in die Parklücke geführt. Ist die erfindungsgemäße Vorrichtung beispielsweise Bestandteil eines semi-autonomen Parkassistenten, so kann der Fahrer zum Beispiel mit Hilfe von akustischen und/oder optischen Signalen, und zwar der ausgewählten, tatsächlichen Einparkbahn nachfolgend, über Aktionen, die er auszuführen hat, um das Fahrzeug in der Parklücke abzustellen, informiert werden. Vorteilhaft erfolgt so ein bezüglich Begrenzungen der Parklücke, beispielsweise benachbarten, bereits geparkten Fahrzeugen und/oder einem Bordstein, exakt ausgerichtetes Abstellen des Fahrzeugs. Mit der Erfindung kann der Fahrer vorzugsweise selbst entscheiden, welche Art von Einparkbahn für den Einparkvorgang gewählt wird, und er kann sich bei der Auswahl beispielsweise nach der für ihn am leichtesten nachzufahrenden Einparkbahn richten. Bevorzugt können zur Bestimmung der Einparkbahnen durch die Auswerteeinheit Klothoiden verwendet werden; diese bieten den Vorteil als Bahnen mit einer konstanten Krümmungsänderung von dem Fahrer des Fahrzeugs besonders leicht nachfahrbar zu sein. Mit einer Verwendung von Klothoiden kann zudem ein Lenken während einer Fahrt ermöglicht werden, es ist nicht erforderlich, dass der Fahrer während des Einparkvorgangs das Lenken während eines Stehens des Fahrzeugs vornimmt. Die Erfindung ist sowohl geeignet für ein Einparken, bei dem der Fahrer Lenken, Bremsen und Beschleunigen des Fahrzeugs vornimmt, als auch für ein Einparken, bei dem das Lenken automatisch ausgeführt wird und die Tätigkeit des Fahrers auf das Bremsen und Beschleunigen sowie eine Überwachungsfunktion beschränkt ist, als auch für ein vollautomatisches Einparken, bei dem der Fahrer lediglich noch eine Überwachungsfunktion innehat.

Vorzugsweise weist die Auswahleinrichtung eine Anzeigevorrichtung, insbesondere mit einem Bildschirm, zur Darstellung der verschiedenen Einparkbahnen auf, wodurch diese dem Fahrer auf einfache Weise und übersichtlich mitgeteilt werden können.

Eine besonders leichte Bedienbarkeit der erfindungsgemäßen Vorrichtung kann vorteilhaft dadurch erreicht werden, dass die Auswahleinrichtung ein Eingabemittel zur Auswahl einer der verschiedenen Einparkbahnen aufweist. Das Eingabemittel kann zum Beispiel einen manuell bedienbaren Taster aufweisen oder Bestandteil eines Bildschirms mit Berührungseingabe (Touch- Screen) sein.

Von Vorteil ist es, wenn die Auswerteeinheit eine Speichereinrichtung zum Abspeichern einer ausgewählten Einparkbahn aufweist, so dass für spätere Einparkvorgänge auf eine oder mehrere früher bereits als bevorzugt ausgewählte Einparkbahnen zurückgegriffen werden kann. Beispielhaft ist es denkbar, dass ein Fahrer des Fahrzeugs regelmäßig eine Einparkbahn, die ein einzügiges Einparken ermöglicht, bevorzugt.

Eine zuverlässige geometrische Vermessung der Parklücke bei hoher Betriebssicherheit und vergleichsweise geringen Kosten für die Sensoranordnung kann vorteilhaft erreicht werden, wenn die Sensoranordnung einen abstandsmessenden Sensor, insbesondere einen Ultraschallsensor, aufweist.

Von besonderem Vorteil für eine weitere Vereinfachung des Einparkens ist es, wenn eine Ausgabeeinrichtung zu einer Übermittlung von Hinweisen an einen Bediener des Fahrzeugs zu einer das Fahrzeug entlang der ausgewählten Einparkbahn in die Parklücke führenden Fahrzeugbedienung vorgesehen ist. Die Ausgabeeinrichtung kann beispielsweise akustisch, einen Lautsprecher aufweisend und/oder optisch, einen Bildschirm aufweisend arbeiten.

Bei dem erfindungsgemäßen Verfahren ist es vorteilhaft, wenn die verschiedenen bestimmten Einparkbahnen mittels der Anzeigevorrichtung gleichzeitig dargestellt werden, so dass ein Bediener, insbesondere der Fahrer des Fahrzeugs, die zur Verfügung stehenden möglichen Einparkbahnen unmittelbar und zusammen erfassen kann.

Die Auswahl der tatsächlichen Einparkbahn kann vorteilhaft dadurch vereinfacht werden, dass die verschiedenen bestimmten Einparkbahnen eine Reihenfolge aufweisen. Bei einer automatischen Auswahl der tatsächlichen Einparkbahn durch die Auswahleinrichtung selbst kann beispielsweise grundsätzlich die in der Reihenfolge erste Einparkbahn gewählt werden.

Insbesondere für eine Erleichterung einer Auswahl einer Einparkbahn, die einen möglichst wenig Einparkzüge erfordernden Einparkvorgang ermöglicht, ist es von besonderem Vorteil, wenn die Reihenfolge der Einparkbahnen abhängig ist von der Anzahl der für ein Einparken entlang der jeweiligen Einparkbahn insgesamt mindestens auszuführenden Einparkzüge. Vorzugsweise steht die die geringste Anzahl an Einparkzügen erfordernde Einparkbahn in der Reihenfolge an erster Stelle.

Bei Benutzung einer Anzeigevorrichtung zur Darstellung der Einparkbahnen wird die Übersichtlichkeit und Erfassbarkeit der Anzeige zusätzlich erhöht, wenn die Darstellungen der Einparkbahnen deren Reihenfolge entsprechend bezeichnet sind. Beispielsweise können die Einparkbahnen mit fortlaufenden arabischen Ziffern bezeichnet sein, oder es kann an den Einparkbahnen die mit der jeweiligen Einparkbahn erforderliche Anzahl mindestens auszuführender Einparkzüge angegeben sein.

Vorzugsweise wird zumindest eine der verschiedenen Einparkbahnen mittels der Auswerteeinheit derart bestimmt, dass der Einparkvorgang einzügig durchführbar ist. Damit wird eine Möglichkeit geboten, die Parklücke in einfacher Weise ohne Änderung der Fahrtrichtung zu erreichen.

Steht eine große Fläche zum Ausführen des Einparkvorgangs ohne Gefahr von Kollisionen zur Verfügung, so ist es insbesondere für einen Einparkvorgang mit vergleichsweise kleinen Lenkradeinschlägen von Vorteil, wenn zumindest eine der verschiedenen Einparkbahnen mittels der Auswerteeinheit derart bestimmt wird, dass der Einparkvorgang zweizügig durchführbar ist.

Für einen besonders geringen Flächenbedarf beim Einparken ist es besonders vorteilhaft, wenn zumindest eine der verschiedenen Einparkbahnen mittels der Auswerteeinheit derart bestimmt wird, dass der Einparkvorgang entlang drei aneinander anschließenden Kreissegmenten durchführbar ist.

Der Fahrer des Fahrzeugs kann die tatsächliche Einparkbahn vorteilhaft direkt und einfach auswählen, wenn mittels des Eingabemittels der Auswahleinrichtung eine Auswahl der tatsächlichen Einparkbahn erfolgt.

Das erfindungsgemäße Verfahren wird dadurch vorteilhaft weiter vereinfacht, dass die Auswahleinrichtung nach einer Zeitspanne eine Auswahl der tatsächlichen Einparkbahn vornimmt. Das kann beispielsweise auch dann geschehen, wenn zwar ein Eingabemittel zur Auswahl einer Einparkbahn vorhanden ist, aber keine Betätigung des Eingabemittels zum Beispiel durch den Fahrer erfolgt.

Zeichnung

Ausführungsbeispiele der Erfindung sind in der Zeichnung schematisiert dargestellt und werden nachfolgend näher beschrieben. Es zeigen

Figur 1 ein Fahrzeug mit einer Vorrichtung zur Unterstützung eines Einparkvorgangs des Fahrzeugs,
Figur 2 einen einzügigen Einparkvorgang,
Figur 3 einen zweizügigen Einparkvorgang,
Figur 4 einen anderen zweizügigen Einparkvorgang und
Figur 5 einen dreizügigen Einparkvorgang.

Beschreibung der Ausführungsbeispiele

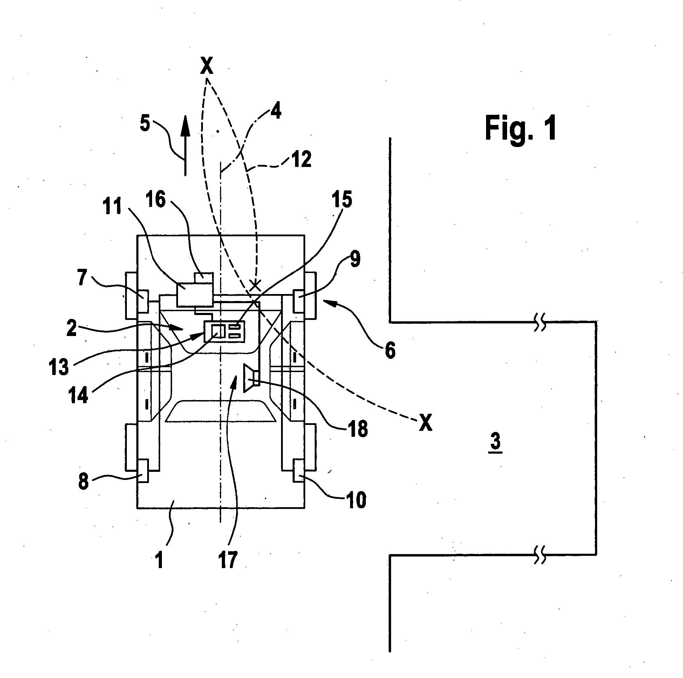

In Figur 1 ist ein als Personenkraftwagen ausgebildetes Fahrzeug 1 mit einer Vorrichtung 2 zur Unterstützung eines Einparkvorgangs des Fahrzeugs 1 in eine quer zu dem Fahrzeug 1 angeordnete Parklücke 3 gezeigt. Die Parklücke 3 ist quer zu der Längsachse 4 des in einer durch einen Pfeil 5 angegebenen Richtung an der Parklücke 3 vorbeifahrenden einzuparkenden Fahrzeugs 1 angeordnet. Die Vorrichtung 2 weist eine Parklückenvermessungseinrichtung mit einer Sensoranordnung 6 mit seitlich an dem Fahrzeug 1 angeordneten, als Ultraschallsensoren 7, 8, 9, 10 ausgebildeten Umfeldsensoren auf, wobei in diesem Beispiel auf der linken Fahrzeugseite zwei Ultraschallsensoren 7, 8 und auf der rechten Fahrzeugseite ebenfalls zwei Ultraschallsensoren 9, 10 angeordnet sind.

Mit der Sensoranordnung 6 verbunden ist eine Auswerteeinheit 11 zum Bestimmen einer Einparkbahn 12 des Fahrzeugs 1 in die Parklücke 3. Aus mehreren verschiedenen von der Auswerteeinheit 11 bestimmten Einparkbahnen, von denen in Figur 1 beispielhaft nur eine Einparkbahn 12 eingezeichnet ist, ist mittels einer mit der Auswerteeinheit 11 verbundenen Auswahleinrichtung 13 eine Einparkbahn 12 als tatsächliche Einparkbahn 12 auswählbar.

Die Auswahleinrichtung 13 weist eine im Bereich einer Armaturentafel des Fahrzeugs 1 angeordnete Anzeigevorrichtung 14 mit einem Bildschirm zur Darstellung der verschiedenen, von der Auswerteeinheit 11 bestimmten Einparkbahnen auf. Ferner weist die Auswahleinrichtung 13 Eingabemittel 15 zur Auswahl einer der verschiedenen auf dem Bildschirm der Anzeigevorrichtung 14 dargestellten Einparkbahnen als tatsächliche Einparkbahn auf.

Weiterhin ist die Auswerteeinheit 11 mit einer Speichereinrichtung 16 zum Abspeichern von als jeweils tatsächliche Einparkbahn ausgewählten Einparkbahnen versehen. Eine Ausgabeeinrichtung 17, die sich für eine optische Ausgabe des Bildschirms der Anzeigevorrichtung 14 und für eine akustische Ausgabe eines Lautsprechers 18 bedient, ist zu einer Übermittlung von Hinweisen an einen Bediener des Fahrzeugs 1, bei dem es sich üblicherweise um den Fahrer handelt, zu einer das Fahrzeug 1 entlang der ausgewählten Einparkbahn 12 in die Parklücke 3 führenden Fahrzeugbedienung vorgesehen.

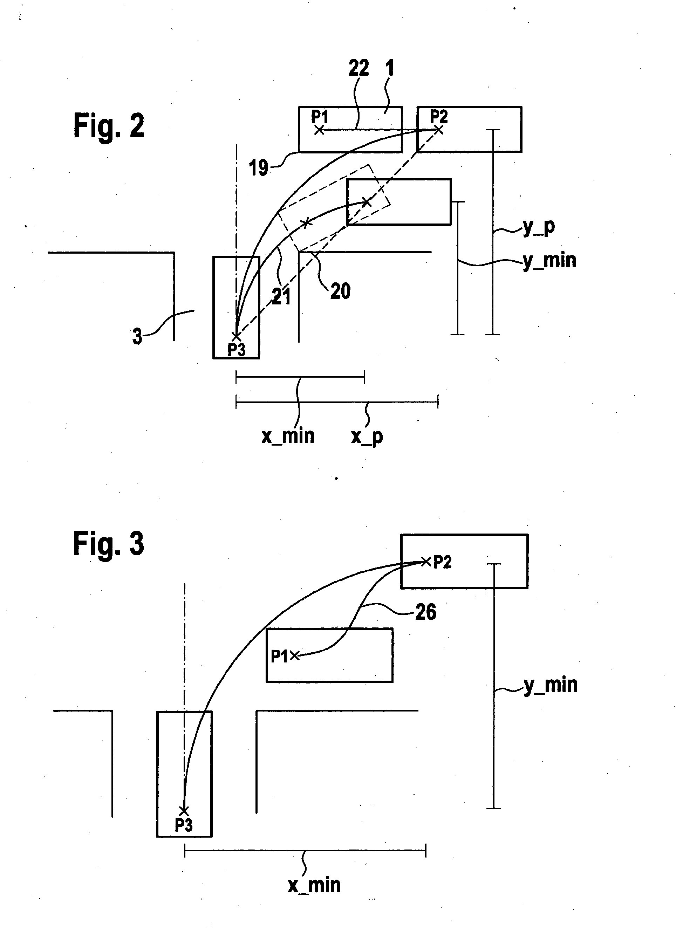

Sich jeweils entsprechende Elemente sind in allen Figuren mit gleichen Bezugszeichen versehen. In Figur 2 ist beispielhaft ein einzügiger Einparkvorgang eines Fahrzeugs 1 in eine Parklücke 3 dargestellt. Ein solcher Einparkvorgang ist grundsätzlich möglich, wenn die Bedingungen

$$x\_p > x\_min \text{ und}$$

$$y\_p > y\_min$$

erfüllt sind, wobei das Koordinatenpaar x_min, y_min den minimalen Platzbedarf und das Koordinatenpaar x_p, y_p die Ausgangsposition des einzuparkenden Fahrzeugs 1 angeben. Das Koordinatenpaar x_min, y_min ergibt sich unter Berücksichtigung einer möglichen Kollision der hinteren der Parklücke 3 zugewandten Fahrzeugecke 19 des Fahrzeugs 1 mit einer Parklückenbegrenzung 20. Die zugehörige, eine Grenzeinparkbahn bildende Einparkbahn 21 ist in Figur 2 gestrichelt, das Fahrzeug 1 in seinen verschiedenen Positionen gepunktet eingezeichnet. Die Grenzeinparkbahn erfordert einen Volleinschlag des Lenkrades des Fahrzeugs 1.

Ein fahrzeugfester Punkt ist als Zielpunkt P3 in Figur 2 eingezeichnet; dieser Punkt ist korrespondierend mit den verschiedenen beispielhaften Positionen des Fahrzeugs 1 in einer ersten Stellung des zu parkenden Fahrzeugs 1 als Ausgangspunkt P1 und in einer zweiten Stellung des zu parkenden Fahrzeugs 1 als Zwischenpunkt P2 eingezeichnet.

Ausgehend von dem minimalen, durch das Koordinatenpaar x_min, y_min gekennzeichneten Platzbedarf und dem Zielpunkt P3 wird die Einparkbahn so expandiert, dass gilt:

$$\frac{x\_p}{y\_p} = \frac{x\_min}{y\_min}.$$

Durch eine Ausgleichsgerade 22 von einer durch den Ausgangspunkt P1 gekennzeichneten Startposition zu dem Zwischenpunkt P2 wird ein kollisionsfreies Einparken von dem Zwischenpunkt P2 zu dem Zielpunkt P3 und damit zur Einparkstellung des Fahrzeugs 1 in der Parklücke 3 ermöglicht.

Werden die zu Figur 2 genannten Bedingungen

$$x\_p > x\_min$$

und

$$y\_p > y\_min$$

nicht erfüllt, so kann entsprechend einer Darstellung in Figur 3 durch eine Ausgleichsfahrt vorwärts entlang einer Vorwärtsbahn 26 ausgehend von einem Ausgangspunkt P1 zu einem Zwischenpunkt P2 eine mögliche Startposition für einen - dann zweizügigen - Einparkvorgang erreicht werden. Die Vorwärtsbahn 26 kann so bestimmt werden, dass gilt:

$$y\_p = y\_min.$$

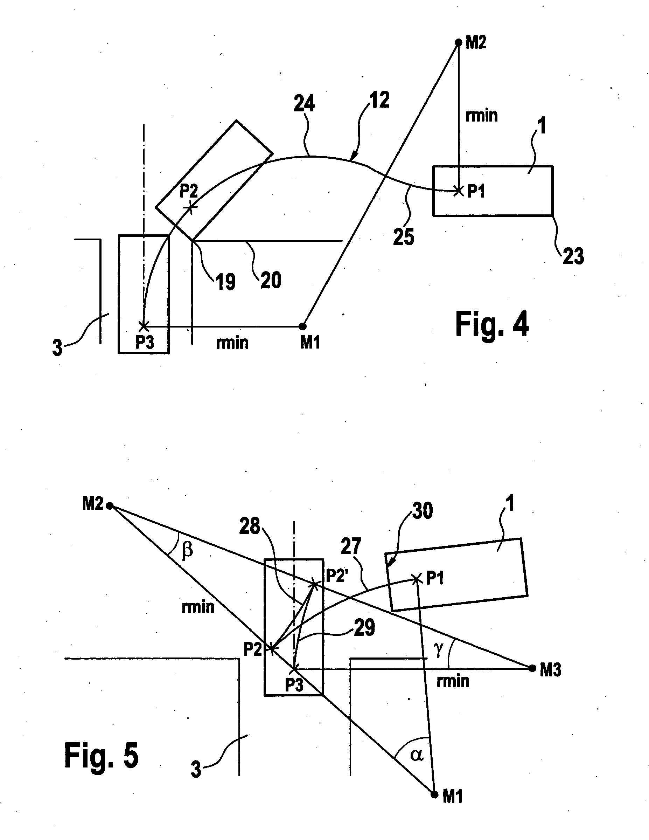

Ein anderer zweizügiger Einparkvorgang eines Fahrzeuges 1 in eine Parklücke 3 ist beispielhaft in Figur 4 dargestellt. Ein solcher zweizügiger Einparkvorgang kann sich bei großen Abständen des einzuparkenden Fahrzeugs 1 von der Parklücke 3 in Fahrtrichtung des Fahrzeugs 1 anbieten. Hierbei gilt es eine mögliche Kollision der vorderen der Parklücke 3 zugewandten Fahrzeugecke 23 des Fahrzeugs 1 mit einer Parklückenbegrenzung 20 zu vermeiden. Weiterhin ist der Mittelpunkt M1, wobei Mittelpunkt hier wie auch im Folgenden als Krümmungsmittelpunkt zu verstehen ist, eines zweiten Teilkreises 24 einer Einparkbahn 12 so zu bestimmen, dass keine Kollision der hinteren der Parklücke 3 zugewandten Fahrzeugecke 19 mit der Parklückenbegrenzung 20 erfolgt. Zudem sind die Bedingungen

$$\overline{P3M1} = \overline{P1M2}$$

und

$$\overline{M1M2} = 2 \cdot r\,min$$

zu erfüllen, wobei M2 den Mittelpunkt eines ersten Teilkreises 25 der Einparkbahn 12, P1 einen fahrzeugfesten Punkt als Ausgangspunkt, P3 den fahrzeugfesten Punkt als Zielpunkt und rmin einen minimalen Radius angibt.

Figur 5 zeigt einen dreizügigen Einparkvorgang eines Fahrzeuges 1, der entlang drei aneinander anschließenden, jeweils gegensinnig gekrümmten Kreissegmenten 27, 28, 29 durchführbar ist, in eine Parklücke 3. Ein solcher Einparkvorgang weist den geringsten Flächenbedarf auf. Er ist ermöglicht, wenn bei einer Fahrt des Fahrzeugs 1 und einer Bewegung eines fahrzeugfesten Punktes von einem Ausgangspunkt P 1 zu einem Zwischenpunkt P2 keine Gefahr einer Kollision des Fahrzeughecks 30 mit einer Parklückenbegrenzung besteht.
Eine erste Kreisfahrt um einen ersten Mittelpunkt M1 und entlang eines ersten Kreissegments 27 wird bis kurz vor einer Berührung des Fahrzeughecks 30 mit der Parklückenbegrenzung vollzogen. Aus dem dann erreichten Zwischenpunkt P2 wird durch Vorwärtsfahrt entlang einem zweiten Kreissegment 28 zu einem nächsten Zwischenpunkt P2' gefahren. Dieser Zwischenpunkt P2' ergibt sich aus den Bedingungen

$$\overline{M3P2'} = \overline{M2P2'} = r\,min\,,$$

wobei M2 der Mittelpunkt des zweiten Kreissegmentes 28 und M3 der Mittelpunkt eines an das zweite Kreissegment 28 anschließenden dritten Kreissegmentes 29 ist. Der jeweils minimale Radius wird durch rmin angegeben. Entlang des dritten Kreissegmentes 29 findet eine Rückwärtsfahrt des Fahrzeugs 1 um den Mittelpunkt M3 des dritten Kreissegmentes 29 zu einem Zielpunkt P3 statt. Damit ist in diesem Ausführungsbeispiel eine gerade Stellung des Fahrzeugs 1 bezüglich der Parklücke 3 erreicht, zum Erreichen der endgültigen Parkstellung ist noch eine Geradeausfahrt des Fahrzeugs 1 in die Parklücke 3 hinein vorzunehmen.

**Patentansprüche**

1. Vorrichtung zur Unterstützung eines Einparkvorgangs eines Fahrzeugs, insbesondere eines Kraftfahrzeugs, in eine quer zu dem Fahrzeug angeordnete Parklücke mit einer eine Sensoranordnung aufweisenden Parklückenvermessungseinrichtung und mit einer mit der Sensoranordnung verbundenen Auswerteeinheit zum Bestimmen einer Einparkbahn des Fahrzeugs in die Parklücke, **dadurch gekennzeichnet, dass** eine mit der Auswerteeinheit (11) verbundene Auswahleinrichtung (13) zum Auswählen einer Einparkbahn (12) aus mehreren verschiedenen von der Auswerteeinheit (11) bestimmten Einparkbahnen vorgesehen ist.

2. Vorrichtung nach Anspruch 1, **dadurch gekennzeichnet, dass** die Auswahleinrichtung (13) eine Anzeigevorrichtung (14) zur Darstellung der verschiedenen Einparkbahnen aufweist.

3. Vorrichtung nach Anspruch 1 oder 2, **dadurch gekennzeichnet, dass** die Auswahleinrichtung (13) ein Eingabemittel (15) zur Auswahl einer der verschiedenen Einparkbahnen aufweist.

4. Vorrichtung nach einem der vorhergehenden Ansprüche, **dadurch gekennzeichnet, dass** die Auswerteeinheit (11) eine Speichereinrichtung (16) zum Abspeichern einer ausgewählten Einparkbahn (12) aufweist.

5. Vorrichtung nach einem der vorhergehenden Ansprüche, **dadurch gekennzeichnet, dass** die Sensoranordnung (6) einen abstandsmessenden Sensor aufweist.

6. Vorrichtung nach einem der vorhergehenden Ansprüche, **dadurch gekennzeichnet, dass** eine Ausgabeeinrichtung (17) zu einer Übermittlung von Hinweisen an einen Bediener des Fahrzeugs (1) zu einer das Fahrzeug (1) entlang der ausgewählten Einparkbahn (12) in die Parklücke (3) führenden Fahrzeugbedienung vorgesehen ist.

7. Verfahren zur Unterstützung eines Einparkvorgangs eines Fahrzeugs, insbesondere eines Kraftfahrzeugs, in eine quer zu dem Fahrzeug angeordnete Parklücke mittels einer Vorrichtung nach einem der vorhergehenden Ansprüche, wobei vor einem Einparken des Fahrzeugs in die Parklücke mittels der Parklückenvermessungseinrichtung eine zumindest teilweise geometrische Vermessung der Parklücke vorgenommen und mittels der Auswerteeinheit auf Grundlage der Vermessung der Parklücke eine Einparkbahn des Fahrzeugs in die Parklücke bestimmt wird, **dadurch gekennzeichnet, dass** mittels der Auswerteeinheit (11) zumindest zwei voneinander verschiedene Einparkbahnen bestimmt werden und dass mittels der Auswahleinrichtung (13) eine der bestimmten Einparkbahnen als tatsächliche Einparkbahn (12) ausgewählt wird.

8. Verfahren nach Anspruch 7, **dadurch gekennzeichnet, dass** die verschiedenen bestimmten Einparkbahnen mittels der Anzeigevorrichtung (14) gleichzeitig dargestellt werden.

9. Verfahren nach Anspruch 7 oder 8, **dadurch gekennzeichnet, dass** die verschiedenen bestimmten Einparkbahnen eine Reihenfolge aufweisen.

10. Verfahren nach Anspruch 9, **dadurch gekennzeichnet, dass** die Reihenfolge der Einparkbahnen abhängig ist von der Anzahl der für ein Einparken entlang der jeweiligen Einparkbahn insgesamt mindestens auszuführenden Einparkzüge.

11. Verfahren nach Anspruch 9 oder 10, **dadurch ge-**

**kennzeichnet, dass** die Darstellungen der Einparkbahnen deren Reihenfolge entsprechend bezeichnet sind.

12. Verfahren nach einem der Ansprüche 7 bis 11, **dadurch gekennzeichnet, dass** zumindest eine der verschiedenen Einparkbahnen mittels der Auswerteinheit (11) derart bestimmt wird, dass der Einparkvorgang einzügig durchführbar ist.

13. Verfahren nach einem der Ansprüche 7 bis 11, **dadurch gekennzeichnet, dass** zumindest eine der verschiedenen Einparkbahnen mittels der Auswerteinheit (11) derart bestimmt wird, dass der Einparkvorgang zweizügig durchführbar ist.

14. Verfahren nach einem der Ansprüche 7 bis 11, **dadurch gekennzeichnet, dass** zumindest eine der verschiedenen Einparkbahnen mittels der Auswerteinheit (11) derart bestimmt wird, dass der Einparkvorgang entlang drei aneinander anschließenden Kreissegmenten (27, 28, 29) durchführbar ist.

15. Verfahren nach einem der Ansprüche 7 bis 14, **dadurch gekennzeichnet, dass** mittels des Eingabemittels (15) der Auswahleinrichtung (13) eine Auswahl der tatsächlichen Einparkbahn (12) erfolgt.

16. Verfahren nach einem der Ansprüche 7 bis 14, **dadurch gekennzeichnet, dass** die Auswahleinrichtung (13) nach einer Zeitspanne eine Auswahl der tatsächlichen Einparkbahn (12) vornimmt.

**Claims**

1. Apparatus for providing assistance during a parking operation of a vehicle, in particular a motor vehicle, into a parking space arranged transversely with respect to the vehicle, having a parking space measuring device which has a sensor arrangement and having an evaluation unit which is connected to the sensor arrangement and is intended to determine a parking path of the vehicle into the parking space, **characterized in that** a selection device (13) which is connected to the evaluation unit (11) and is intended to select a parking path (12) from a plurality of different parking paths determined by the evaluation unit (11) is provided.

2. Apparatus according to Claim 1, **characterized in that** the selection device (13) has a display apparatus (14) for displaying the different parking paths.

3. Apparatus according to Claim 1 or 2, **characterized in that** the selection device (13) has an input means (15) for selecting one of the different parking paths.

4. Apparatus according to one of the preceding claims, **characterized in that** the evaluation unit (11) has a storage device (16) for storing a selected parking path (12).

5. Apparatus according to one of the preceding claims, **characterized in that** the sensor arrangement (6) has a distance-measuring sensor.

6. Apparatus according to one of the preceding claims, **characterized in that** an output device (17) for transmitting suggestions to an operator of the vehicle (1) for vehicle operation which guides the vehicle (1) into the parking space (3) along the selected parking path (12) is provided.

7. Method for providing assistance during a parking operation of a vehicle, in particular a motor vehicle, into a parking space arranged transversely with respect to the vehicle using an apparatus according to one of the preceding claims, the parking space measuring device being used to carry out an at least partially geometrical measurement of the parking space and the evaluation unit being used to determine a parking path of the vehicle into the parking space on the basis of the measurement of the parking space before parking the vehicle in the parking space, **characterized in that** the evaluation unit (11) is used to determine at least two parking paths which are different from one another, and **in that** the selection device (13) is used to select one of the determined parking paths as the actual parking path (12).

8. Method according to Claim 7, **characterized in that** the different parking paths determined are displayed at the same time using the display apparatus (14).

9. Method according to Claim 7 or 8, **characterized in that** the different parking paths determined have an order.

10. Method according to Claim 9, **characterized in that** the order of the parking paths is dependent on the number of parking manoeuvres at least to be carried out in total for parking along the respective parking path.

11. Method according to Claim 9 or 10, **characterized in that** the representations of the parking paths are denoted according to their order.

12. Method according to one of Claims 7 to 11, **characterized in that** at least one of the different parking paths is determined using the evaluation unit (11) in such a manner that the parking operation can be carried out in one manoeuvre.

13. Method according to one of Claims 7 to 11, **charac-**

**terized in that** at least one of the different parking paths is determined using the evaluation unit (11) in such a manner that the parking operation can be carried out in two manoeuvres.

14. Method according to one of Claims 7 to 11, **characterized in that** at least one of the different parking paths is determined using the evaluation unit (11) in such a manner that the parking operation can be carried out along three circle segments (27, 28, 29) which adjoin one another.

15. Method according to one of Claims 7 to 14, **characterized in that** the actual parking path (12) is selected using the input means (15) of the selection device (13).

16. Method according to one of Claims 7 to 14, **characterized in that** the selection device (13) selects the actual parking path (12) after a period of time.

## Revendications

1. Dispositif pour assister une opération de stationnement d'un véhicule, notamment d'un véhicule automobile, dans une place de stationnement disposée transversalement par rapport au véhicule avec un dispositif de mesure de place de stationnement comportant un agencement de capteur et avec une unité d'analyse reliée à l'agencement de capteur afin de déterminer une trajectoire de stationnement du véhicule pour entrer dans la place de stationnement, **caractérisé en ce qu'**un dispositif de sélection (13) relié à l'unité d'analyse (11) est prévu pour sélectionner une trajectoire de stationnement (12) parmi plusieurs trajectoires de stationnement différentes définies par l'unité d'analyse (11).

2. Dispositif selon la revendication 1, **caractérisé en ce que** le dispositif de sélection (13) comporte un dispositif d'affichage (14) permettant de représenter les différentes trajectoires de stationnement.

3. Dispositif selon la revendication 1 ou 2, **caractérisé en ce que** le dispositif de sélection (13) comporte un moyen de saisie (15) permettant de sélectionner une des différentes trajectoires de stationnement.

4. Dispositif selon l'une quelconque des revendications précédentes, **caractérisé en ce que** l'unité d'analyse (11) comporte un dispositif de mémoire (16) permettant de mémoriser une trajectoire de stationnement (12) sélectionnée.

5. Dispositif selon l'une quelconque des revendications précédentes, **caractérisé en ce que** l'agencement de capteur (6) comporte un capteur de mesure de la distance.

6. Dispositif selon l'une quelconque des revendications précédentes, **caractérisé en ce qu'**un dispositif d'émission (17) est prévu pour transmettre des indications à un utilisateur du véhicule (1) relatives à une utilisation du véhicule permettant de guider le véhicule (1) dans la place de stationnement (3) le long de la trajectoire de stationnement (12) sélectionnée.

7. Procédé pour assister une opération de stationnement d'un véhicule, notamment d'un véhicule automobile, dans une place de stationnement disposée transversalement par rapport au véhicule à l'aide d'un dispositif selon l'une quelconque des revendications précédentes, une mesure au moins en partie géométrique de la place de stationnement étant réalisée avant un stationnement du véhicule dans la place de stationnement à l'aide du dispositif de mesure de place de stationnement et une trajectoire de stationnement du véhicule dans la place de stationnement étant définie à l'aide de l'unité d'analyse sur la base de la mesure de la place de stationnement, **caractérisé en ce qu'**au moins deux trajectoires de stationnement différentes l'une de l'autre sont définies à l'aide de l'unité d'analyse (11) et qu'une des trajectoires de stationnement définies est sélectionnée comme trajectoire de stationnement (12) effective à l'aide du dispositif de sélection (13).

8. Procédé selon la revendication 7, **caractérisé en ce que** les différentes trajectoires de stationnement définies sont représentées simultanément à l'aide du dispositif d'affichage (14).

9. Procédé selon la revendication 7 ou 8, **caractérisé en ce que** les différentes trajectoires de stationnement définies présentent une séquence.

10. Procédé selon la revendication 9, **caractérisé en ce que** la séquence des trajectoires de stationnement dépend du nombre de mouvements de stationnement à réaliser au moins au total pour effectuer un stationnement le long de la trajectoire de stationnement respective.

11. Procédé selon la revendication 9 ou 10, **caractérisé en ce que** les représentations des trajectoires de stationnement sont désignées en fonction de leur séquence.

12. Procédé selon l'une quelconque des revendications 7 à 11, **caractérisé en ce qu'**au moins une des différentes trajectoires de stationnement est définie à l'aide de l'unité d'analyse (11) de telle sorte que l'opération de stationnement puisse être effectuée d'un seul coup.

**13.** Procédé selon l'une quelconque des revendications 7 à 11, **caractérisé en ce qu'**au moins une des différentes trajectoires de stationnement est définie à l'aide de l'unité d'analyse (11) de telle sorte que l'opération de stationnement peut être effectuée en deux coups.

**14.** Procédé selon l'une quelconque des revendications 7 à 11, **caractérisé en ce qu'**au moins une des différentes trajectoires de stationnement est définie à l'aide de l'unité d'analyse (11) de telle sorte que l'opération de stationnement puisse être effectuée le long de trois segments circulaires (27, 28, 29) se jouxtant les uns les autres.

**15.** Procédé selon l'une quelconque des revendications 7 à 14, **caractérisé en ce qu'**une sélection de la trajectoire de stationnement (12) effective se produit à l'aide du moyen de saisie (15) du dispositif de sélection (13).

**16.** Procédé selon l'une quelconque des revendications 7 à 14, **caractérisé en ce que** le dispositif de sélection (13) effectue une sélection de la trajectoire de stationnement (12) effective après une certaine période de temps.

EP 1 915 285 B1

Fig. 1

10

**Fig. 2**

22   1

P1

P2

19

y_p

y_min

21   20

3

P3

x_min   x_p

**Fig. 3**

P2

26

P1

y_min

P3

x_min

EP 1 915 285 B1

**Fig. 4**

**Fig. 5**

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1462342 A2
- EP 0189144 A2
- EP 1491979 A1
- WO 2005100135 A1